# EUROPÄISCHE PATENTSCHRIFT

(11) **EP 1 659 312 B1**
(45) Veröffentlichungstag und Bekanntmachung des Hinweises auf die Patenterteilung: **07.07.2010**
(21) Anmeldenummer: 05022967.3
(22) Anmeldetag: 21.10.2005
(51) Int. Cl.: F16H 25/22

(54) **Kugelgewindetrieb**
Ball screw drive
Vis d'entraînement à billes

(30) Priorität: 17.11.2004 DE 102004055423
(43) Veröffentlichungstag der Anmeldung: 24.05.2006
(73) Patentinhaber: Schaeffler KG, 91074 Herzogenaurach (DE)
(72) Erfinder: Osterlaenger, Juergen, 91448 Emskirchen (DE); Mayer, Ralf, 91074 Herzogenaurach (DE); Adler, Dieter, 91074 Herzogenaurach (DE); Kraus, Manfred, Dr., 91074 Herzogenaurach (DE)

(56) Entgegenhaltungen:
- DE-A1- 4 229 583
- DE-B1- 2 809 647
- JP-A- 2003 336 716
- US-A- 2 343 507
- US-A- 2 945 392
- US-A1- 2004 045 388

## Beschreibung

### Gebiet der Erfindung

Die vorliegende Erfindung betrifft Kugelgewindetriebe. Diese Getriebe wandeln Drehbewegungen in Längsbewegungen um. In modernen Kraftfahrzeugen finden Kugelgewindetriebe zunehmend Anwendung in elektromechanischen Lenkhilfen bei Zahnstangenlenkungen. Bei derartigen Lenkhilfen ist die Zahnstange teilweise als Kugelrollspindel ausgebildet. Ein Elektromotor treibt die Spindelmutter an, sodaß eine Längsverschiebung der Zahnstange elektromotorisch unterstützt ist.

Aus DE 100 56 275 A1 beispielsweise ist ein Kugelgewindetrieb bekannt geworden, mit einer auf einer Kugelrollspindel angeordneten Spindelmutter, an deren Innenumfang um eine Achse schraubenförmig gewundene Windungen von Kugelrillen zum Abwälzen von Kugeln vorgesehen sind. Am Außenumfang der Spindelmutter sind mit jeweils einem Umlenkkanal für Kugeln vorgesehene Umlenkkörper angeordnet. Diese Umlenkkörper verbinden mit ihren beiden Enden einen Anfang einer Windung mit einem Ende einer Windung, um ein endloses Umlaufen der Kugeln zu ermöglichen.

Der Umlenkkörper ist in einer Ausnehmung des Befestigungsflansches angeordnet und in radialer Richtung gehalten. Dieser Befestigungsflansch ist fest mit der Spindelmutter verbunden. Die Ausnehmung des Befestigungsflansches kann etwas größer ausgebildet sein, um ein radiales Spiel zwischen dem Befestigungsflansch und dem Umlenkstück zu ermöglichen. Dieses radiale Spiel kann erforderlich sein, um Fertigungstoleranzen zu berücksichtigen. Ferner können sich unerwünschte Klappergeräusche bemerkbar machen, wenn der Umlenkkörper gegen den Befestigungsflansch anschlägt. Bei einem zu großen Radialspiel ist eine einwandfreie Führung des Umlenkstückes außerhalb der Spindelmutter nicht gewährleistet. Bei einem zu geringen Radialspiel ist ein Klemmen des Umlenkstückes möglich, die ebenfalls die einwandfreie Funktion des Kugelgewindetriebes nachteilig beeinflussen kann.

Aus gattungsgemäßer JP2003336716 war ein Kugelgewindetrieb bekannt, bei dem ein am Außenumfang der Spindelmutter angeordnetes Umlenkrohr mittels einer separaten Blattfeder gegen die Spindelmutter angepresst ist. Die Blattfeder ist zwischen einem Rohrandrücker und dem Umlenkrohr angeordnet.

Aus US2,343,507 war ein Kugelgewindetrrieb bekannt, bei dem ein am Außenumfang der Spindelmutter angeordnetes Umlenkrohr als flexibles Rohr ausgebildet ist, das beispielsweise durch eine gewundene Feder ausgebildet ist. Dieses Umlenkrohr ist nicht steif, sondern extrem flexibel und kann ohne nennenswerte Verformung an enge Radien angepasst werden. Durch Verdrehung der Federenden um die Längsachse des Rohres kann der Federdurchmesser verkleinert werden. Dieses Umlenkrohr ist auch in Längsrichtung flexibel, so dass bei Bedarf eine größere Anzahl von Kugeln aufgenommen werden kann.

Aufgabe der vorliegenden Erfindung ist es, einen Kugelgewindetrieb nach den Merkmalen des Oberbegriffs des Anspruchs 1 anzugeben, der einfach herzustellen ist und zuverlässig arbeitet, wobei ein einwandfreier Umlauf insbesondere im Umlenkkörper gewährleistet ist.

Erfindungsgemäß wird diese Aufgabe durch den Kugelgewindetrieb gemäß Anspruch 1 gelöst. Der Einfluss des Radialspiels auf die Funktion und Betriebssicherheit des Kugelgewindetriebes ist durch die Anordnung des Federelementes erheblich vermindert. Ferner ist mit der Erfindung sichergestellt, dass im Falle eines Radialspiels ein Klappern vermieden ist, denn der Umlenkkörper kann nicht mehr frei schwingen und beispielsweise an die innere Wandung des Befestigungsflansches anschlagen und unerwünschte Klappergeräusche hervorrufen.

Der Umlenkkörper ist an wenigstens einer der Stütze zugewandten Federstelle federelastisch ausgebildet und mit dieser Federstelle gegen die Stütze angefedert. Derartige Federstellen können beispielsweise einstückig an den Umlenkkörper angeformte federnde Zungen sein, die radial von der Kontur des Umlenkkörpers abstehen und gegen die Stütze angefedert sind. Diese Federstellen können jedoch auch durch erhaben von der Kontur des Umlenkkörpers abstehende Stege sein, die federelastische Eigenschaften haben. In diesen Fällen sind derartige Umlenkkörper aus Kunststoff im Spritzverfahren hergestellt. Der besondere Vorteil liegt darin, dass keine zusätzlichen Mittel zur Ausbildung eines erfindungsgemäßen Kugelgewindetriebes erforderlich sind.

Vorzugsweise ist ein Federweg des Federelementes begrenzt durch an dem Umlenkkörper und an der Stütze vorgesehene Anschläge. Die Begrenzung des Federweges stellt sicher, dass unerwünscht große Auslenkungen des Umlenkkörpers ausgeschlossen sind. Innerhalb des Federweges sind Bewegungen zwischen der Stützte und dem Umlenkkörper möglich. Diese Anschläge können in einfacher Weise durch die einander zugewandten Wandungen der Stütze und des Umlenkkörpers gebildet sein.

Zwischen den Enden des Umlenkkörpers können mehrere dieser Federelemente vorzugsweise symmetrisch verteilt angeordnet sein. Bei einer symmetrischen Anordnung der Federelemente findet eine gleichmäßige Abstützung des Umlenkkörpers gegenüber der Stütze statt, sodaß eine einwandfreie Lage des Umlenkkörpers gegenüber der Stütze und gegenüber der Spindelmutter gewährleistet ist.

Erfindungsgemäß ist der Umlenkkörper an sich federnd ausgebildet und an der Stütze federnd abgestützt. Der Umlenkkörper kann demzufolge derart elastisch ausgebildet sein, dass auch bei ungünstigen Einbaubedingungen beispielsweise ein Unterbringen in einer Ausnehmung eines Befestigungsflansches möglich ist, ohne dass die Funktion des Kugelgewindetriebes beeinträchtigt ist, wobei zugleich unerwünschte Klappergeräusche unterbunden sind.

Der Umlenkkörper kann eine an die Innenkontur der Stütze angepasste Außenkontur aufweisen, wobei der Umlenkkörper in einem Abstand zu seiner Außenkontur mit wenigstens einer Ausnehmung versehen ist derart, dass die Ausnehmung und die Außenkontur einen die Stütze bildenden federnden Steg begrenzen. Ein derartiger Umlenkkörper ist aus Kunststoff im Spritzverfahren gebildet.

Die Stütze kann durch ein drehfest auf der Spindelmutter angeordnetes Zahnrad gebildet sein, wobei zwischen dem Zahnkranz des Zahnrades und der Spindelmutter eine Kammer zur Aufnahme des Umlenkkörpers vorgesehen ist. In diesem Fall kann eine Innenkontur des Zahnkranzes und die Außenkontur des Umlenkkörpers aneinander angepasst sein, wobei das Federelement an die Innenkontur des Zahnkranzes angefedert ist. Diese erfindungsgemäße Weiterbildung ist besonders raumsparend, da der Umlenkkörper innerhalb des Zahnrades untergebracht ist.

Der weiter oben erwähnte Federweg des Federelementes kann durch den Abstand zwischen der Innenkontur der Stütze und der Außenkontur des Umlenkkörpers begrenzt sein.

Der Federweg ist so bemessen, dass selbst bei Versagen des Federelementes die Grundposition des Umlenkkörpers gegenüber der Spindelmutter gehalten wird. Das sich dann einstellende geringe Spiel zwischen den Umlenkkörper und der Stütze würde die Grundfunktion der Kugelführung nicht beeinträchtigen.

Nachstehend wird die Erfindung anhand von zwei in insgesamt acht Figuren abgebildeten Ausführungsbeispiel näher erläutert. Es zeigen:
- Figur 1: einen Längsschnitt durch einen erfindungsgemäßen Ku gelgewindetrieb,
- Figur 2: eine perspektivische Darstellung des Kugelgewindetriebes gemäß Figur 1, jedoch mit freiliegendem Umlenkkörper,
- Figur 3: eine Hälfte eines Umlenkkörpers des Kugelgewindetriebes gemäß Figur 1,
- Figur 4: in vergrößerter Darstellung ein Detail der Figur 3,
- Figur 5: in perspektivischer Darstellung ein Zahnrad zur drehfesten Anordnung auf einer Spindelmutter eines weiteren erfindungsgemäßen Kugelgewindetriebes,
- Figur 6: einen Längsschnitt durch das Zahnrad aus Figur 5,
- Figur 7: eine Ansicht des Zahnrades aus Figur 5 und
- Figur 8: eine Ansicht eines weiteren erfindungsgemäßen Kugelgewindetriebes.

### Ausführliche Beschreibung der Zeichnung

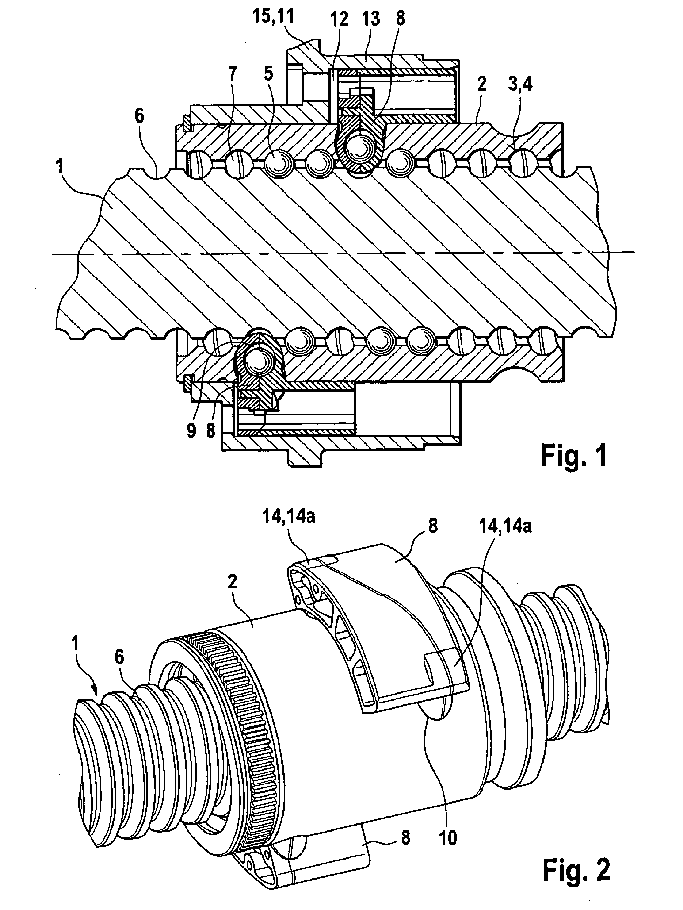

Der in den Figuren 1 und 2 abgebildete erfindungsgemäße Kugelgewindetrieb weist eine Kugelrollspindel 1 auf, auf der eine Spindelmutter 2 drehbar gelagert ist. Am Innenumfang der Spindelmutter 2 sind schraubenförmig um die Kugelrollspindel 1 gewundene Windungen 3 von Kugelrillen 4 zum Abwälzen von Kugeln 5 ausgebildet. Die Kugelrollspindel 1 ist ebenfalls mit einer schraubenförmig gewundenen Kugelrille 6 versehen. Die Kugelrillen 4 und 6 begrenzen einen Kugelkanal 7, in dem die Kugeln 5 umlaufen. Die Spindelmutter 2 ist ferner mit mehreren über den Umfang verteilt angeordneten Umlenkkörpern 8 versehen. Die Umlenkkörper 8 sind am Außenumfang der Spindelmutter 2 angeordnet. Die Enden der Umlenkkörper 8 verbinden einen Anfang einer Windung 3 mit einem Ende einer Windung 3, sodaß ein endloser Kugelkanal 7 zum Umlaufen der Kugeln 5 gebildet ist. Figur 2 zeigt, dass ein Ende des Umlenkköpers 8 in eine an der Spindelmutter 2 vorgesehenen Bohrung 10 eingreift, um den Umlenkkanal 9 an die Kugelrille 4 also an den Kugelkanal 7 anzuschließen.

Der Figur 1 ist ferner zu entnehmen, dass auf der Spindelmutter ein Adapter 11 angeordnet ist. Dieser Adapter 11 ist drehfest mit der Spindelmutter 2 verbunden. Dieser Adapter 11 dient der Aufnahme und Befestigung eines hier nicht abgebildeten Zahnrades zum Antrieben der Spindelmutter 2. In einer Ausnehmung 12 des Adapters 11 ist je einer der Umlenkkörper 8 angeordnet. Der Umlenkkörper 8 liegt auf dem Mantel der Spindelmutter 2 an. Die radial außen liegende Außenkontur des Umlenkkörpers 8 ist kreisbogenförmig ausgebildet. Die Ausnehmung 12 des Adapters 11 ist radial außen durch eine ebenfalls kreisbogenförmig ausgebildete Wand 13 begrenzt. Zwischen dem Umlenkkörper 8 und der Wand 13 des Adapters 11 ist ein geringfügiger Abstand ausgebildet. Einstückig an den Umlenkkörper 8 angeformte Federelemente 14 stehen erhaben von der Außenkontur des Umlenkkörpers 8 ab (Figur 2) und sind gegen die Wand 13 des Adapters 11 angefedert. Der Adapter 11 dient hier als Stütze 15 zur radialen Abstützung des Umlenkkörpers 8. Der Figur 2 kann entnommen werden, dass an beiden umfangsseitigen Enden des Umlenkkörpers 8 je ein Federelement 14 vorgesehen ist. Bei dieser symmetrischen Anordnung der Federelemente 14 ist eine gleichmäßige radiale Abstützung des Umlenkkörpers 8 an der Stütze 15 gewährleistet. Die Federelemente 14 sind federelastische Federstellen 14a des Umlenkörpers 8.

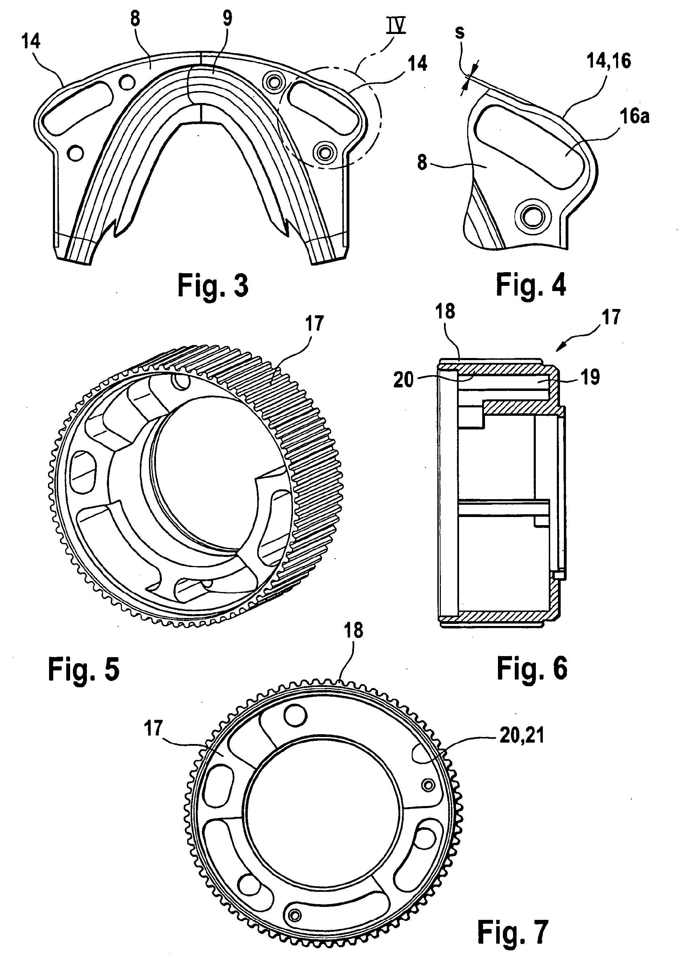

Die Figuren 3 und 4 zeigen eine Hälfte des Umlenkkörpers 8 und eine Detailvergrößerung in Figur 4. Figur 3 zeigt deutlich die eine Längshälfte des Umlenkkanals 9 und die Federelemente 14 die erhaben von der kreisbogenförmigen Außenkontur des Umlenkkörpers 8 abstehen. In Figur 4 ist der geringfügige Abstand s zwischen der kreisbogenförmigen Außenkontur des Umlenkkörpers 8 und der hier nicht abgebildeten Wand der Stütze 15 mit s gekennzeichnet. Dieser Abstand s entspricht einem maximalen Federweg, den das Federelement 14 einfedern kann. Bei Erreichen des maximalen Federweges s berühren die kreisbogenförmig ausgebildeten Konturen des Umlenkkörpers 8 und der Wand 13 einander, sodaß eine weitere Auslenkung des Umlenkkörpers 8 ausgeschlossen ist. Die Konturen der Wand 13 und des Umlenkkörpers 8 dienen als Anschläge zur Begrenzung des Federweges s. Figur 4 zeigt deutlich die Ausbildung des Federelementes 14 als Steg 16. Der Steg 16 ist federelastisch verformbar. Der Steg 16 ist radial begrenzt durch eine Ausnehmung 16a im Umlenkkörper 8 und durch die Außenkontur des Umlenkkörpers 8. Die Ausnehmung 16a ist mit Abstand zu der Außenkontur angeordnet.

Bei einem weiteren erfindungsgemäßen Kugelgewindetrieb ist der Adapter entfernt und ersetzt durch ein Zahnrad 17, das direkt auf die Spindelmutter 2 aufgesetzt werden kann. Da sich dieses Ausführungsbeispiel gemäß Figuren 5 - 7 von dem oben beschriebenen lediglich durch das hier vorgesehene Zahnrad 17 unterscheidet, beschränkt sich die Beschreibung zu diesem Ausführungsbeispiel lediglich auf die Ausbildung und Funktion des Zahnrades 17. Das Zahnrad 17 ist ebenfalls drehfest auf der Spindelmutter 2 angeordnet. Zwischen einem Zahnkranz 18 des Zahnrades 17 und der Spindelmutter 2 sind Kammern 19 zur Aufnahme jeweils eines der Umlenkkörper 8 ausgebildet. Ebenso wie bei dem vorangegangenen Ausführungsbeispiel ist hier die Kammer 19 durch eine kreisbogenförmig ausgebildete Wand 20 des Zahnkranzes 18 begrenzt. Ebenso wie bei dem oben beschriebenen Ausführungsbeispiel ist der Umlenkkörper 8 mit seinen Federelementen 14 gegen den Zahnkranz 18 abgestützt. Die Ausbildung der Kammer 19 ist deutlich der Figur 6 zu entnehmen. Figur 7 zeigt deutlich die kreisbogenförmige Ausbildung der Wand 20. Auch bei diesem erfindungsgemäßen Kugelgewindetrieb dient das Zahnrad 17 als Stütze 21 für den Umlenkkörper 8.

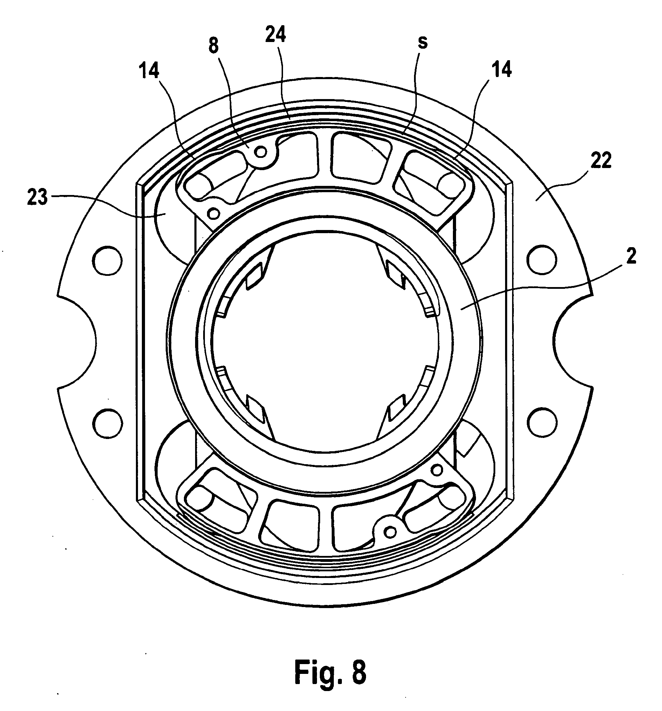

Der in Figur 8 abgebildete erfindungsgemäße Kugelgewindetrieb entspricht weitgehend dem in den Figuren 1 und 2 abgebildeten Kugelgewindetrieb.

Auf die Darstellung der Kugelrollspindel wurde verzichtet. In dieser Figur ist ein Adapter 22 zur drehfesten Verbindung mit der Spindelmutter 2 vorgesehen. Dieser Adapter 22 weist ebenso wie der Adapter 11 eine Kammer 23 zur Aufnahme der Umlenkkörper 8 auf. In dieser Abbildung ist der radiale Abstand (= Federweg s) zwischen der kreisbogenförmigen Außenkontur des Umlenkkörpers 8 und der kreisbogenförmigen Kontur der die Kammer 23 begrenzenden Wand 24 des Adapters 22 erkennbar. Es ist erkennbar, dass die an den umfangsseitigen Enden des Umlenkkörpers 8 angeordneten Federelemente 14 an der Wand 24 des Adapters 22 abgestützt, also angefedert sind.

Die hier abgebildeten und beschriebenen Umlenkstücke sind sämtlich aus Kunststoff im Spritzverfahren aus thermoplastischen Kunststoff hergestellt. Andere Kunststoffe können anwendungsabhängig eingesetzt werden.

### Bezugszahlenliste

- 1: Kugelrollspindel
- 2: Spindelmutter
- 3: Windung
- 4: Kugelrille
- 5: Kugel
- 6: Kugelrille
- 7: Kugelkanal
- 8: Umlenkkörper
- 9: Umlenkkanal
- 10: Bohrung
- 11: Adapter
- 12: Ausnehmung
- 13: Wand
- 14: Federelement
- 14a: Federstelle
- 15: Stütze
- 16: Steg
- 16a: Ausnehmung
- 17: Zahnrad
- 18: Zahnkranz
- 19: Kammer
- 20: Wand
- 21: Stütze
- 22: Adapter
- 23: Kammer
- 24: Wand

## Patentansprüche

1. Kugelgewindetrieb, mit einer auf einer Kugelrollspindel (1) vorsehbaren Spindelmutter (2), an deren Innenumfang um eine Achse schraubenförmig gewundene Windungen (3) von Kugelrillen (4) zum Abwälzen von Kugeln (5) vorgesehen sind, wobei wenigstens ein am Außenumfang der Spindelmutter (2) angeordneter, mit einem Umlenkkanal (9) für die Kugeln (5) versehener Umlenkkörper (8) mit seinen beiden Enden einen Anfang einer Windung (3) mit einem Ende einer Windung (3) verbindet, um ein endloses Umlaufen der Kugeln (5) zu ermöglichen, wobei der Umlenkkörper (8) zwischen seinen beiden Enden an einer Stütze (15, 21) abgestützt ist, wobei der Umlenkkörper (8) mittels wenigstens eines Federelementes (14) an der Stütze (15, 21) federelastisch abgestützt ist, **dadurch gekennzeichnet, dass** der aus Kunststoff im Spritzverfahren hergestellte Umlenkkörper (8) an wenigstens einer der Stütze (15, 21) zugewandten Federstelle (14a) federelastisch ausgebildet und diese Federstelle (14a) gegen die Stütze (15, 21) angefedert ist, wobei diese Federstelle (14a) durch eine einstückig an den Umlenkkörper (8) angeformte Zunge oder Steg (16) gebildet ist.

2. Kugelgewindetrieb nach Anspruch 1, bei dem ein Federweg (s) des Federelementes (14) begrenzt ist durch an dem Umlenkkörper (8) und an der Stütze (15, 21) vorgesehene Anschläge.

3. Kugelgewindetrieb nach Anspruch 1, bei dem mehrere dieser Federelemente (14) zwischen den Enden des Umlenkkörpers (8) vorzugsweise symmetrisch verteilt angeordnet sind.

4. Kugelgewindetrieb nach Anspruch 1, bei dem mehrere dieser Federstellen (14a) zwischen den Enden des Umlenkkörpers (8) vorzugsweise symmetrisch verteilt angeordnet sind.

5. Kugelgewindetrieb nach Anspruch 1, bei dem der Umlenkkörper (8) eine an die Innenkontur der Stütze (15, 21) angepaßte Außenkontur aufweist, wobei der Umlenkkörper (8) in einem Abstand zu der Außenkontur mit wenigstens einer Ausnehmung (16a) versehen ist derart, dass die Ausnehmung (16a) und die Außenkontur einen das Federelement (14) bildenden federnden Steg (16) begrenzen.

6. Kugelgewindetrieb nach Anspruch 5, bei dem der Steg (16) erhaben von der Außenkontur des Umlenkkörpers (8) absteht.

7. Kugelgewindetrieb nach Anspruch 1, bei dem auf der Spindelmutter (2) ein Zahnrad (17) drehfest angeordnet ist, wobei zwischen einem Zahnkranz (18) des Zahnrades (17) und der Spindelmutter (2) eine Kammer (19) zur Aufnahme des Umlenkkörpers (8) vorgesehen ist.

8. Kugelgewindetrieb nach Anspruch 7, bei dem eine Innenkontur des Zahnkranzes (18) und die Außenkontur des Umlenkkörpers (8) aneinander angepaßt sind, wobei das Federelement (14) an der Innenkontur des Zahnkranzes (18) abgestützt ist.

9. Kugelgewindetrieb nach Anspruch 1, bei dem der Umlenkkörper (8) eine an die Innenkontur der Stütze (15, 21) angepaßte Außenkontur aufweist, wobei das Federelement (14) erhaben von der Außenkontur des Umlenkkörpers (8) absteht und federnd an der Stütze (15, 21) abgestützt ist, wobei ein Federweg (s) des Federelementes (14) begrenzt ist durch den Abstand zwischen der Innenkontur der Stütze (15, 21) und der Außenkontur des Umlenkkörpers (8).

## Claims

1. Ball screw, having a spindle nut (2) which may be provided on a recirculating ball screw (1) and on the inner circumference of which turns (3) of ball grooves (4), helically wound around an axis, are provided in which balls (5) can roll, at least one return element (8), arranged on the outer circumference of the spindle nut (2) and provided with a return duct (9) for the balls (5), at its two ends connecting a start of a turn (3) to an end of a turn (3) in order to permit a continuous recirculation of the balls (5), the return element (8) between its two ends being supported on a support (15, 21), the return element (8) being resiliently supported by means of at least one spring element (14) on the support (15, 21), **characterized in that** the return element (8) made from injection moulded plastic is resiliently formed on at least one spring point (14a) facing the support (15, 21) and this spring point (14a) is sprung against the support (15, 21), this spring point (14a) being formed by a tongue or web (16) which is integrally formed onto the return element (8).

2. Ball screw according to Claim 1, **characterized in that** a spring travel (s) of the spring element (14) is limited by stops provided on the return element (8) and on the support (15, 21).

3. Ball screw according to Claim 1, **characterized in that** multiple such spring elements (14) are arranged, preferably symmetrically distributed, between the ends of the return element (8).

4. Ball screw according to Claim 1, **characterized in that** multiple such spring points (14a) are arranged, preferably symmetrically distributed, between the ends of the return element (8).

5. Ball screw according to Claim 1, **characterized in that** the return element (8) has an external contour matched to the internal contour of the support (15, 21), the return element (8) being provided at a distance from the external contour with at least one recess (16a), in such a way that the recess (16a) and the external contour define a resilient web (16) forming the spring element (14).

6. Ball screw according to Claim 5, **characterized in that** the web (16) stands proud of the external contour of the return element (8).

7. Ball screw according to Claim 1, **characterized in that** a gear wheel (17) is arranged rotationally fixed on the spindle nut (2), a chamber (19) to accommodate the return element (8) being provided between one toothed rim (18) of the gear wheel (17) and the spindle nut (2).

8. Ball screw according to Claim 7, **characterized in that** an internal contour of the toothed rim (18) and the external contour of the return element (8) are matched to one another, the spring element (14) being supported on the internal contour of the toothed rim (18).

9. Ball screw according to Claim 1, **characterized in that** the return element (8) has an external contour matched to the internal contour of the support (15, 21), the spring element (14) standing proud of the external contour of the return element (8) and being resiliently supported on the support (15, 21), a spring travel (s) of the spring element (14) being defined by the distance between the internal contour of the support (15, 21) and the external contour of the return element (8).

## Revendications

1. Vis d'entraînement à billes, comprenant un écrou de broche (2) pouvant être prévu sur une vis à billes (1), sur la périphérie interne duquel sont prévues des spires (3) enroulées en hélice autour d'un axe, de gorges à billes (4) pour permettre le roulement de billes (5), au moins un corps de renvoi (8) disposé sur la périphérie externe de l'écrou de broche (2), pourvu d'un canal de renvoi (9) pour les billes (5), reliant par ses deux extrémités un début d'une spire (3) à une extrémité d'une spire (3), afin de permettre une circulation sans fin des billes (5), le corps de renvoi (8) étant supporté entre ses deux extrémités sur un support (15, 21), le corps de renvoi (8) étant supporté de manière élastique à ressort au moyen d'au moins un élément de ressort (14) sur le support (15, 21), **caractérisée en ce que** le corps de renvoi (8) fabriqué en plastique par un procédé d'injection est réalisé en au moins un emplacement de ressort (14a) tourné vers le support (15, 21) de manière élastique à ressort et cet emplacement de ressort (14a) est fixé à ressort contre le support (15, 21), cet emplacement de ressort (14a) étant formé par une langue ou une nervure (16) façonnée d'une seule pièce sur le corps de renvoi (8).

2. Vis d'entraînement à billes selon la revendication 1, dans laquelle une course de ressort (s) de l'élément de ressort (14) est limitée par des butées prévues sur le corps de renvoi (8) et sur le support (15, 21).

3. Vis d'entraînement à billes selon la revendication 1, dans laquelle plusieurs de ces éléments de ressort (14) sont disposés entre les extrémités du corps de renvoi (8) de préférence de manière répartie symétriquement.

4. Vis d'entraînement à billes selon la revendication 1, dans laquelle plusieurs de ces emplacements de ressort (14a) sont disposés de préférence de manière répartie symétriquement entre les extrémités du corps de renvoi (8).

5. Vis d'entraînement à billes selon la revendication 1, dans laquelle le corps de renvoi (8) présente un contour extérieur adapté au contour intérieur du support (15, 21), le corps de renvoi (8) étant pourvu, à une distance du contour extérieur, d'au moins un évidement (16a), de telle sorte que l'évidement (16a) et le contour extérieur limitent une nervure (16) à ressort formant l'élément de ressort (14).

6. Vis d'entraînement à billes selon la revendication 5, dans laquelle la nervure (16) fait saillie de manière rehaussée depuis le contour extérieur du corps de renvoi (8).

7. Vis d'entraînement à billes selon la revendication 1, dans laquelle une roue dentée (17) est disposée de manière solidaire en rotation sur l'écrou de broche (2), une chambre (19) étant prévue entre une couronne dentée (18) de la roue dentée (17) et l'écrou de broche (2) pour recevoir le corps de renvoi (8).

8. Vis d'entraînement à billes selon la revendication 7, dans laquelle un contour intérieur de la couronne dentée (18) et le contour extérieur du corps de renvoi (8) sont adaptés l'un à l'autre, l'élément de ressort (14) étant supporté sur le contour intérieur de la couronne dentée (18).

9. Vis d'entraînement à billes selon la revendication 1, dans laquelle le corps de renvoi (8) présente un contour extérieur adapté au contour intérieur du support (15, 21), l'élément de ressort (14) faisant saillie de manière rehaussée depuis le contour extérieur du corps de renvoi (8) et étant supporté à ressort sur le support (15, 21), une course de ressort (s) de l'élément de ressort (14) étant limitée par la distance entre le contour intérieur du support (15, 21) et le contour extérieur du corps de renvoi (8).
